(19) **Europäisches Patentamt**
**European Patent Office**
**Office européen des brevets**

(11) **EP 3 660 559 B1**

(12) **FASCICULE DE BREVET EUROPEEN**

(45) Date de publication et mention
de la délivrance du brevet:
**29.09.2021 Bulletin 2021/39**

(51) Int Cl.:
*G02B 6/26* (2006.01)     *G02B 6/42* (2006.01)
*G02B 6/04* (2006.01)     *G02B 19/00* (2006.01)

(21) Numéro de dépôt: **19211829.7**

(22) Date de dépôt: **27.11.2019**

(54) **PROCÉDÉ DE FABRICATION D'UN COUPLEUR OPTIQUE**

FERTIGUNGSVERFAHREN EINES OPTISCHEN KOPPLERS

MANUFACTURING PROCESS OF AN OPTICAL COUPLER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2018 FR 1872150**

(43) Date de publication de la demande:
**03.06.2020 Bulletin 2020/23**

(73) Titulaire: **Commissariat à l'Energie Atomique et
aux Energies
Alternatives
75015 Paris (FR)**

(72) Inventeurs:
• **LE BLEVENNEC, Gilles**
**38054 GRENOBLE CEDEX 9 (FR)**
• **CONSONNI, Marianne**
**38054 GRENOBLE CEDEX 9 (FR)**

(74) Mandataire: **Cabinet Beaumont
4, Place Robert Schuman
B.P. 1529
38025 Grenoble Cedex 1 (FR)**

(56) Documents cités:
**EP-A1- 1 739 468     DE-A1-102016 015 558
FR-A1- 2 362 408     US-A- 5 192 863
US-A- 5 301 249**

**Description**

Domaine technique

La présente invention concerne de façon générale les coupleurs optiques.

Technique antérieure

Un coupleur optique est un dispositif de liaison permettant de guider de la lumière depuis une face d'entrée, recevant de la lumière fournie par un dispositif de fourniture de lumière, jusqu'à une face de sortie, fournissant la lumière transmise à un dispositif de réception de lumière. Le coupleur est caractérisé par le fait que les dimensions de la face d'entrée et de la face de sortie sont différentes.

A titre d'exemple, le dispositif de fourniture de lumière peut comprendre une source lumineuse étendue, par exemple une diode électroluminescente, une lampe, ou le soleil, ou peut comprendre un faisceau de fibres optiques transportant de la lumière. A titre d'exemple, le dispositif de réception de lumière peut correspondre à un faisceau de fibres optiques, à une cellule photovoltaïque ou à un capteur.

Pour certaines applications, le rapport entre l'aire de la surface d'entrée et l'aire de la surface de sortie doit être grand devant l'unité. Cela est notamment le cas lorsque le coupleur joue le rôle d'un concentrateur. Il peut alors être difficile de réaliser un coupleur optique qui soit sensiblement sans perte, c'est-à-dire pour lequel sensiblement tous les rayons lumineux parvenant à la face d'entrée s'échappent par la face de sortie. Les documents FR2362408, US5192863, US5301249, et EP1739468 décrivent des coupleurs optiques.

Résumé de l'invention

Il existe un besoin d'un coupleur optique dont le rapport entre la surface d'entrée et la surface de sortie est grand devant l'unité, qui est sensiblement sans perte et qui a une structure simple.

L'invention prévoit un procédé de fabrication d'un coupleur optique selon la revendication 1.

Des modes de réalisation particuliers sont définis selon les revendications dépendantes.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 illustre la propagation de rayons lumineux dans un coupleur optique tronconique avec pertes ;

la figure 2 est une vue en coupe, partielle et schématique, d'un exemple de coupleur optique tronconique ;

la figure 3 illustre les conditions d'extraction des rayons lumineux dans l'air en sortie d'un coupleur optique tronconique ;

la figure 4 illustre les conditions d'extraction des rayons lumineux dans un guide d'onde en sortie d'un coupleur tronconique ;

la figure 5 représente des courbes d'évolution de l'angle d'incidence initial maximal de rayons lumineux dans un coupleur optique tronconique sans pertes en fonction de la longueur du coupleur optique pour plusieurs rapports entre le rayon d'entrée et le rayon de sortie du coupleur ;

la figure 6 est un schéma par blocs d'un mode de réalisation d'un procédé de fabrication d'un coupleur optique ;

la figure 7 est une vue en coupe, partielle et schématique, d'un coupleur optique comprenant une ondulation obtenu par la mise en oeuvre de ce procédé de fabrication.

la figure 8 représente une courbe d'évolution du profil du coupleur optique de la figure 7 et une courbe d'évolution du profil tronconique correspondant ;

la figure 9 est une vue en coupe, partielle et schématique, d'un coupleur optique comprenant plusieurs ondulations ;

la figure 10 représente une courbe d'évolution du profil du coupleur optique de la figure 9 ;

la figure 11 représente des courbes d'évolution du rendement de transmission du coupleur optique en fonction du demi-angle d'ouverture de la source lumineuse respectivement pour un coupleur optique tronconique et pour le coupleur optique de la figure 7 ; et

la figure 12 représente des courbes d'évolution du rendement de transmission du coupleur optique en fonction du diamètre de la source lumineuse respectivement pour un coupleur optique tronconique et pour le coupleur optique de la figure 7.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et sont détaillés. Sauf précision contraire, les expressions "environ", "approximativement", "sensiblement", et "de l'ordre de" signifient à 10 % près, de préférence à 5 % près.

Dans la suite de la description, on appelle rayonnement utile le rayonnement électromagnétique devant être transmis par le coupleur optique et on entend par indice de réfraction d'un matériau l'indice de réfraction du matériau à la longueur d'onde du rayonnement utile. A titre d'exemple, il peut s'agir d'un rayonnement dans le spectre visible, l'infrarouge ou les microondes. Lorsque le rayonnement utile n'est pas un rayonnement monochromatique, l'indice de réfraction du matériau correspond à l'indice de réfraction moyen sur la plage de longueurs d'ondes du rayonnement utile. Dans la suite de la description, on entend par l'expression "un élément principalement en un matériau" que ledit élément comprend plus de 50 % en volume dudit matériau, de préférence plus de 80 % en volume, plus préférentiellement plus de 90 % en volume.

Pour réaliser un coupleur optique de structure simple et ayant des faces d'entrée et de sortie de forme circulaire et de rayons différents, il pourrait être envisagé d'utiliser un coupleur optique de forme tronconique à base circulaire. Toutefois, les inventeurs ont mis en évidence que, notamment lorsque le rapport entre l'aire de la face d'entrée et l'aire de la surface de sortie est grand devant l'unité, notamment supérieur à 20, de préférence supérieur à 50, plus préférentiellement supérieur à 70, un coupleur optique tronconique peut présenter des pertes optiques importantes.

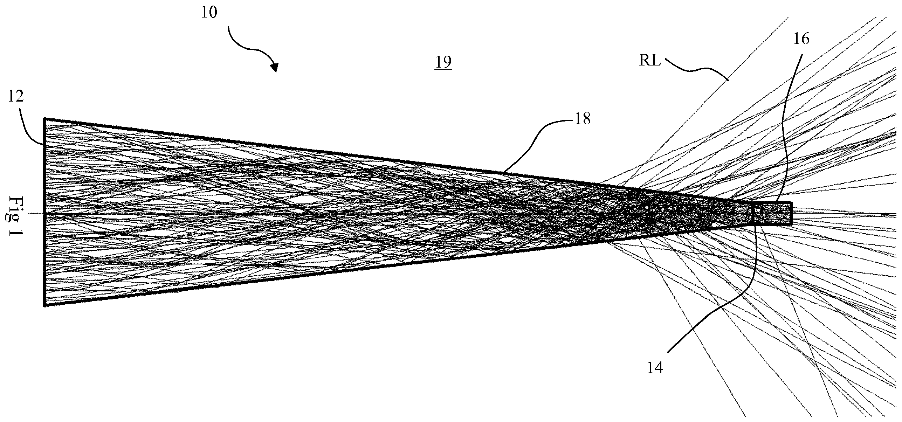

La figure 1 est une vue en coupe, partielle et schématique, représentant un coupleur optique 10 tronconique à base circulaire comprenant une face d'entrée 12 et une face de sortie 14 au contact d'un guide d'onde 16 cylindrique à base circulaire. Le coupleur 10 comprend une paroi latérale tronconique 18, au contact d'un milieu extérieur 19, par exemple de l'air, reliant la face d'entrée 12 à la face de sortie 14. La figure 1 représente les parcours de rayons lumineux déterminés par simulation dans le cas où le rayon de la face d'entrée 12 était de 20 mm, le rayon de la face de sortie 14 était de 2,5 mm et la longueur du coupleur optique 10, mesurée selon son axe, était de 140 mm. De plus, pour les simulations, le coupleur 10 et le guide d'onde 16 étaient en poly(méthacrylate de méthyle) (PMMA) et le milieu extérieur 19 autour du coupleur 10 et du guide d'onde 16 était de l'air. Comme cela apparaît sur la figure 1, certains rayons lumineux RL s'échappent du coupleur 10 avant d'atteindre le guide d'onde 16. Dans le présent exemple, les pertes optiques, qui correspondent à la différence entre l'unité et le rapport entre la puissance optique fournie par la face de sortie 14 et la puissance optique reçue par la face d'entrée 12, sont de l'ordre de 65 %.

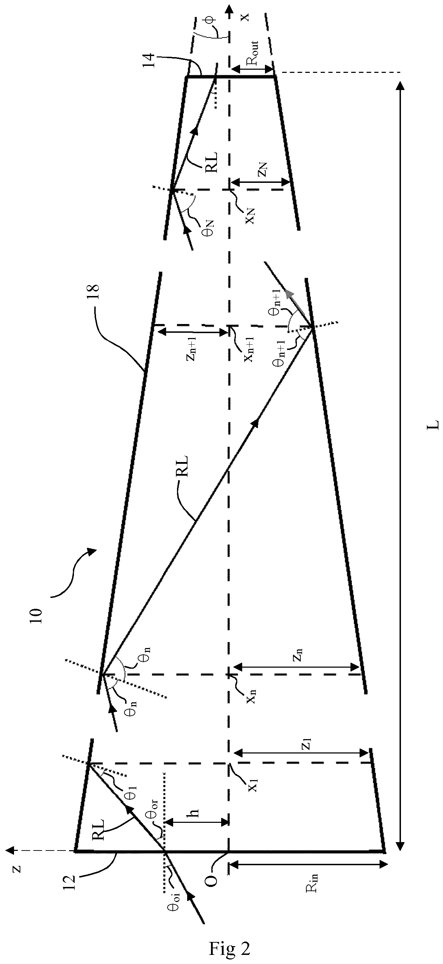

La figure 2 est une vue en coupe, partielle et schématique, d'un coupleur tronconique 10, illustrant des paramètres géométriques du coupleur 10. Le coupleur 10 correspond à un tronc de cône à base circulaire. On considère que le coupleur 10 a une structure homogène en un matériau ayant un indice de réfraction $n1$ et qu'au moins la paroi latérale tronconique 18 du coupleur 10 est au contact d'un milieu extérieur dont l'indice de réfraction est $n2$. Le milieu extérieur correspond de préférence à de l'air.

On définit, dans le plan de coupe, un repère (Oxz) d'origine O le centre de la face d'entrée 12, l'axe (Ox) correspondant à l'axe de révolution du tronc de cône et l'axe (Oz) étant perpendiculaire à l'axe (Ox) et situé dans le plan de coupe de la figure 2. Selon un mode de réalisation, les faces 12 et 14 sont planes et parallèles. On a représenté en figure 2 le parcours d'un rayon lumineux RL dans le coupleur 10.

De plus, on appelle :

- $R_{in}$ le rayon de la face d'entrée 12 du coupleur 10 ;

- $R_{out}$ le rayon de la face de sortie 14 du coupleur 10 ;

- L la longueur du tronc de cône mesurée selon l'axe (Ox) ;

- $\phi$ le demi-angle au sommet du coupleur 10 ;

- h la hauteur du rayon d'entrée RL mesurée selon l'axe (Oz) ;

- $\theta_{0i}$ l'angle d'incidence initial du rayon lumineux RL incident atteignant la face d'entrée 12 ; et

- $\theta_{0r}$ l'angle de réfraction initial du rayon lumineux RL réfracté par la face d'entrée 12 dans le coupleur optique 10.

Selon un mode de réalisation, chacun des rayons $R_{in}$ et $R_{out}$ est supérieur à 10 fois la longueur d'onde du rayonnement utile et de préférence supérieur à 1 mm, de préférence compris entre 1 mm et 100 mm. A titre d'exemple, le rayon $R_{in}$ est compris entre 10 mm et 30 mm et le rayon $R_{out}$ est compris entre 1 mm et 5 mm.

La face d'entrée 12 est destinée à recevoir un faisceau lumineux. Il peut s'agir d'un faisceau lumineux émis directement par une source lumineuse, d'un faisceau lumineux émis par une source lumineuse au travers d'un système optique, comprenant par exemple une lentille, ou d'un faisceau lumineux transmis par un guide d'onde, comprenant par exemple un faisceau de fibres optiques. Le faisceau lumineux incident peut être un faisceau divergent, un faisceau convergent, ou un faisceau collimaté, c'est-à-dire dont les rayons sont sensiblement parallèles. Selon un mode de réalisation, un système optique, par exemple une lentille elliptique, peut être accolé à la face d'entrée 12. Dans ce cas, la face d'entrée 12 peut ne pas correspondre à une interface réelle entre deux milieux d'indices de réfraction différents et l'angle d'incidence initial $\theta_{0i}$ et l'angle de réfraction initial $\theta_{0r}$ sont alors égaux. De façon générale, lorsque la face d'entrée 12 n'est pas plane, le rayon $R_{in}$ correspond au rayon de la section droite circulaire du coupleur à la jonction entre la face d'entrée 12 et la paroi latérale 18. De même, lorsque la face de sortie 14 n'est pas plane, le rayon $R_{out}$ correspond au rayon de la section droite circulaire du coupleur à la jonction entre la face de sortie 14 et la paroi latérale 18.

Le demi-angle $\phi$ au sommet du tronc de cône est relié aux autres paramètres du tronc de cône par la relation 1) suivante :

[Math 1]

$$\phi = \text{arctg}\left(\frac{R_{in} - R_{out}}{L}\right)$$

Le facteur de concentration du coupleur 10 est égal au rapport entre l'aire de la face d'entrée 12 et l'aire de la face de sortie 14 et est donc égal au rapport $(R_{in}/R_{out})^2$. Selon un mode de réalisation, le facteur de concentration est compris entre 10 et 300, de préférence entre 50 et 100.

L'angle d'incidence du rayon RL, lorsque le rayon RL atteint la paroi tronconique latérale 18, correspond à l'angle entre la direction perpendiculaire à la paroi 18 et le rayon RL. Selon le parcours du rayon RL, celui-ci peut être amené à se réfléchir totalement plusieurs fois sur la paroi 18. L'angle d'incidence $\theta_n$ à la réflexion de rang n du rayon RL sur la paroi 18 est donné par la relation 2) suivante :

[Math 2]

$$\theta_n = \theta_1 - 2(n-1)\phi$$

La relation 2) montre que l'angle d'incidence $\theta_n$ diminue à chaque réflexion par rapport à la réflexion précédente.

On appelle $x_1$ et $z_1$ respectivement la position mesurée selon l'axe (Ox) et la hauteur mesurée selon l'axe (Oz) de la première réflexion totale sur la paroi 18 du rayon lumineux RL entrant par la face d'entrée 12 avec la hauteur h et l'angle de réfraction initial $\theta_{0r}$. La position $x_1$ est donnée par la relation 3) suivante :

[Math 3]

$$x_1 = \frac{L(R_{in} - h)}{R_{in} - R_{out} + L\tan\theta_{0r}}$$

La hauteur $z_1$ est donnée par la relation 4) suivante :

[Math 4]

$$z_1 = h + x_1 \tan\theta_{0r}$$

De façon générale, la position $x_n$ mesurée selon l'axe (Ox) de la réflexion totale de rang n du rayon lumineux RL sur la paroi 18 est donnée par la relation de récurrence 5) suivante, pour tout entier naturel n supérieur ou égal à 1 :

[Math 5]

$$x_{n+1}-x_n=\frac{2z_n\tan(\theta_n-\Phi)}{1+\tan\phi\tan(\theta_n-\Phi)}$$

En outre, la hauteur $z_n$ mesurée selon l'axe (Oz) de la réflexion totale de rang n du rayon lumineux RL sur la paroi 18 est donnée par la relation de récurrence 6) suivante, pour tout entier naturel n supérieur ou égal à 1 :

[Math 6]

$$z_{n+1}-z_n=(x_n-x_{n+1})\tan\phi$$

Une première condition pour que le coupleur 10 soit sans perte optique est que chaque réflexion du rayon lumineux RL sur la paroi tronconique latérale 18 soit une réflexion totale. Pour que la réflexion de rang n, n étant un nombre entier supérieur ou égal à 1, du rayon lumineux RL au point de coordonnées ($x_n$, $z_n$) soit totale, il faut que l'angle d'incidence $\theta_n$ du rayon RL sur la paroi tronconique latérale 18 à la réflexion de rang n soit supérieur à un angle limite de réfraction $\theta_{lim}$ donné par la relation 7) suivante :

[Math 7]

$$\theta_{lim}=\arcsin\left(\frac{n2}{n1}\right)$$

A titre d'exemple, lorsque le coupleur 10 est en PMMA, dont l'indice de réfraction pour la lumière visible est d'environ 1,49, et que le milieu extérieur est l'air, l'angle limite de réfraction $\theta_{lim}$ est égal à environ 42°.

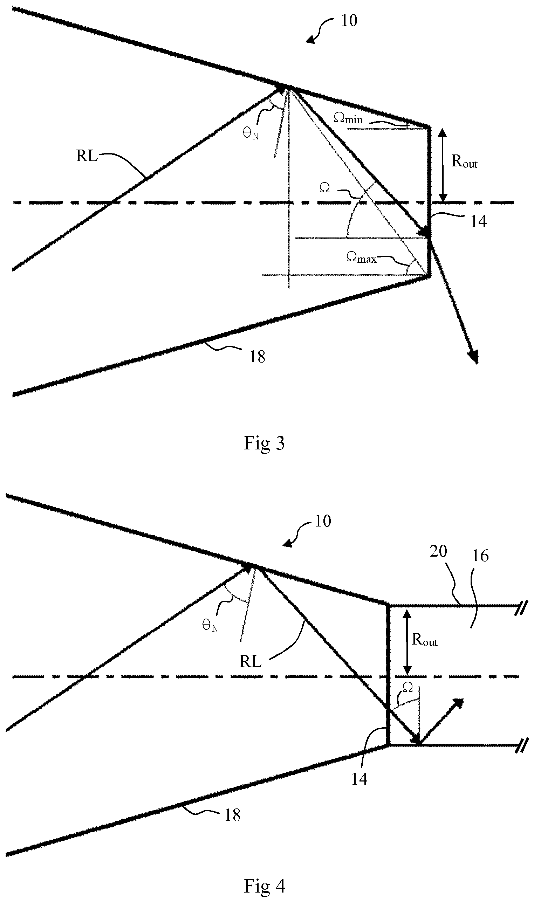

La figure 3 est une vue en coupe, partielle et schématique, qui illustre des deuxièmes conditions pour que le coupleur 10 soit sans perte optique dans le cas où la face de sortie 14 est au contact du milieu d'indice n2. Pour qu'il n'y ait pas de réflexion totale du rayon RL sur la face de sortie 14, il faut que l'angle d'incidence $\Omega$ du rayon lumineux RL sur la face de sortie 14 soit inférieur à l'angle d'incidence limite $\theta_{lim}$ décrit précédemment. Ceci implique la relation 8) suivante pour l'angle d'incidence $\theta_N$ à la dernière réflexion totale de rang N avant que le rayon RL n'atteigne la face de sortie 14 :

[Math 8]

$$\theta_N>\frac{\pi}{2}-\theta_{lim}+\phi$$

Après la réflexion de rang N, pour que le rayon lumineux RL atteigne bien la face de sortie 14, il faut que l'angle d'incidence $\theta_N$ vérifie en outre les inégalités 9) suivantes :

[Math 9]

$$\frac{\pi}{2}+\phi-\Omega_{max}\leq\theta_N\leq\frac{\pi}{2}+\phi-\Omega_{min}$$

L'angle $\Omega_{min}$ est donné par la relation 10) suivante :

[Math 10]

$$\Omega_{min}=\arctan\left(\frac{z_N-R_{out}}{L-x_N}\right)$$

L'angle $\Omega_{max}$ est donné par la relation 11) suivante :

[Math 11]

$$\Omega_{max} = \arctan\left(\frac{z_N + R_{out}}{L - x_N}\right)$$

La figure 4 est une vue en coupe, partielle et schématique, qui illustre la deuxième condition dans le cas où la face de sortie 14 est au contact d'un guide d'onde cylindrique 16 dont l'indice de réfraction est le même que celui du coupleur optique 10 et dont la paroi latérale 20 correspond à un cylindre à base circulaire de rayon $R_{out}$. En pratique, notamment pour obtenir un guide d'onde 16 ayant les propriétés mécaniques recherchées, notamment une souplesse suffisante, le guide d'onde 16 peut correspondre à un faisceau de fibres optiques parallèles ayant chacune un rayon inférieur à $R_{out}$, le faisceau de fibres étant inscrit dans un cylindre à base circulaire de rayon $R_{out}$. Toutefois, comme les fibres optiques agencées en faisceau se comportent d'un point de vue optique sensiblement de la même façon qu'une fibre optique unique de même rayon que le faisceau, on considère par la suite que le guide d'onde 16 a une structure monobloc.

Il faut que le rayon lumineux RL pénètre dans le guide d'onde 16 en respectant la condition de réflexion totale sur la paroi latérale 20 du guide d'onde 16 pour que la propagation sans perte du rayon lumineux RL se poursuive dans le guide d'onde 16. Pour qu'il y ait réflexion totale du rayon RL sur la paroi latérale 20 du guide d'onde 16, il faut que l'angle d'incidence $\Omega'$ du rayon lumineux RL sur la paroi latérale 20 soit supérieur à l'angle limite $\theta_{lim}$ décrit précédemment. Ceci implique la relation 12) suivante sur l'angle d'incidence $\theta_N$ à la dernière réflexion totale de rang N avant que le rayon RL n'atteigne la face de sortie 14 :

[Math 12]

$$\theta_N > \theta_{lim} + \phi$$

L'angle d'incidence $\theta_N$ doit en outre vérifier les inégalités 9) décrites précédemment.

Dès que le rapport entre le rayon d'entrée et le rayon de sortie est élevé, il apparaît que les contraintes imposées aux dimensions du coupleur tronconique 10 sont importantes pour permettre une transmission sans perte d'un rayon RL d'angle d'incidence initial $\theta_{0i}$.

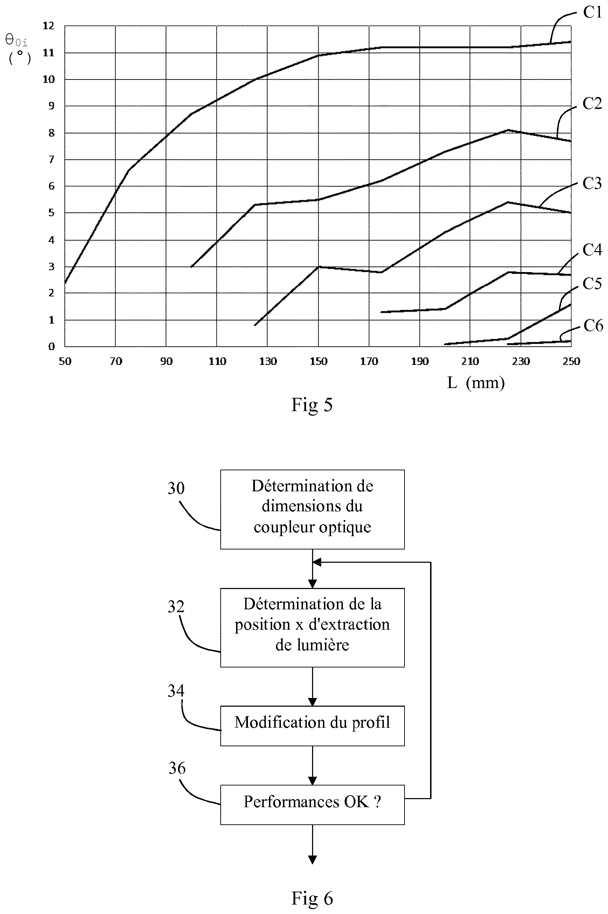

La figure 5 représente des courbes C1, C2, C3, C4, C5 et C6 d'évolution de l'angle d'incidence initial $\theta_{0i}$ maximal d'un rayon lumineux RL transmis sans perte par le coupleur tronconique 10 en fonction de la longueur L du coupleur tronconique 10 pour des rapports $R_{in}/R_{out}$ respectivement égaux à 4, 5, 6, 7, 8 et 9. Les courbes C1 à C5 ont été obtenues en considérant un coupleur tronconique 10 en PMMA dont la face de sortie 14 est au contact de l'air, avec un rayon $R_{out}$ égal à 2,5 mm, et avec une hauteur h égale à $R_{in}$-0,1 mm. Comme cela apparaît sur cette figure, l'angle d'incidence initial $\theta_{0i}$ maximal diminue fortement dès que le rapport entre l'aire de la face d'entrée 12 et de la face de sortie 14 est grand, notamment supérieur à 20 (ce qui correspond à un rapport $R_{in}/R_{out}$ supérieur à environ 4,5).

Dans la suite de la description, on appelle profil P du coupleur la fonction qui, à chaque position x de l'axe (Ox), associe la hauteur z de la paroi latérale du coupleur optique à la position x. Pour un coupleur tronconique, le profil P correspond à une droite, c'est-à-dire une fonction de type affine.

Les inventeurs ont mis en évidence que les performances de transmission sans perte du coupleur optique peuvent être améliorées en utilisant un profil obtenu en modifiant le profil tronconique. Plus précisément, dans un plan contenant l'axe du coupleur, les performances de transmission sans perte du coupleur optique peuvent être améliorées en prévoyant au moins une ondulation sur le profil par rapport au profil tronconique, c'est-à-dire que le profil successivement passe au-dessous du profil tronconique puis au-dessus du profil tronconique.

La figure 6 est un schéma par blocs d'un mode de réalisation d'un procédé de fabrication d'un coupleur optique.

A l'étape 30, il est déterminé les dimensions $R_{in}$, $R_{out}$ et L souhaitées du coupleur optique en tenant compte notamment de contraintes d'encombrement. Le procédé se poursuit à l'étape 32.

A l'étape 32, il est déterminé, par simulation, la propagation de rayons lumineux dans le coupleur optique, notamment dans les cas les plus défavorables, c'est-à-dire généralement pour le rayon lumineux RL ayant l'angle d'incidence initial $\theta_{0i}$ maximal souhaité et la hauteur h maximale souhaitée. Ceci permet de déterminer la position $x_K$ à laquelle ce rayon lumineux s'échappe du coupleur en traversant la paroi latérale du coupleur, c'est-à-dire la position $x_K$ à laquelle la condition de réflexion totale n'est pas remplie. A la première occurrence de l'étape 32, le profil $P_0$ utilisé est un profil tronconique, c'est-à-dire la droite passant par le point de coordonnées $(0, R_{in})$ et le point $(L, R_{out})$. Le procédé se poursuit à l'étape 34.

A l'étape 34, il est déterminé un nouveau profil $P_1$ en modifiant le profil précédent $P_0$ utilisé à l'étape 32 en formant une ondulation au niveau de la position $x_K$ de façon que la hauteur $P_1(x_K)$ du profil $P_1$ à la position $x_K$ soit supérieure à la hauteur $P_0(x_K)$ du profil tronconique à la position $x_K$, par exemple de 10 % et que, à une position $x_L$ entre l'origine O et la position $x_K$, la hauteur $P_1(x_L)$ du profil $P_1$ à la position $x_L$ soit inférieure à la hauteur $P_0(x_L)$ du profil précédent à la position $x_L$, par exemple par échelons successifs de 1 % jusqu'à ce que la courbure du profil $P_1$ à la position $x_K$ permette d'obtenir une réflexion totale autour de la position $x_K$. Selon un mode de réalisation, la position $x_L$ est comprise entre 60 % et 90 % de la position $x_K$. On obtient ainsi la formation d'une ondulation dans le profil comprenant une portion convexe au niveau de la position $x_K$ précédée d'une portion concave. Le procédé se poursuit à l'étape 36.

Par portion convexe, il est entendu que le profil délimite une portion du coupleur dans lequel tous les points d'un segment de droite qui joint deux points quelconques de sa surface appartiennent aussi au coupleur. A contrario, par portion concave, il est entendu que le profil délimite une portion du coupleur dans lequel tous les points d'un segment de droite qui joint deux points quelconques de sa surface, dans un plan contenant l'axe du coupleur, n'appartiennent pas au coupleur.

A l'étape 36, il est déterminé si les performances optiques du nouveau profil $P_1$ sont satisfaisantes. A titre d'exemple, il peut être déterminé par simulation si tous les rayons RL correspondant aux cas les plus défavorables se propagent dans le coupleur optique jusqu'à la face de sortie 14. Si cela est le cas, le procédé s'achève. Si à l'étape 36, il est déterminé que les performances optiques du nouveau profil $P_1$ ne sont pas satisfaisantes, par exemple si les rayons RL dans les cas les plus défavorables continuent de s'échapper du coupleur optique avant d'atteindre la face de sortie 14, à une position comprise entre $x_K$ et L, le procédé se poursuit à l'étape 32, en utilisant le profil $P_1$ comme profil précédent.

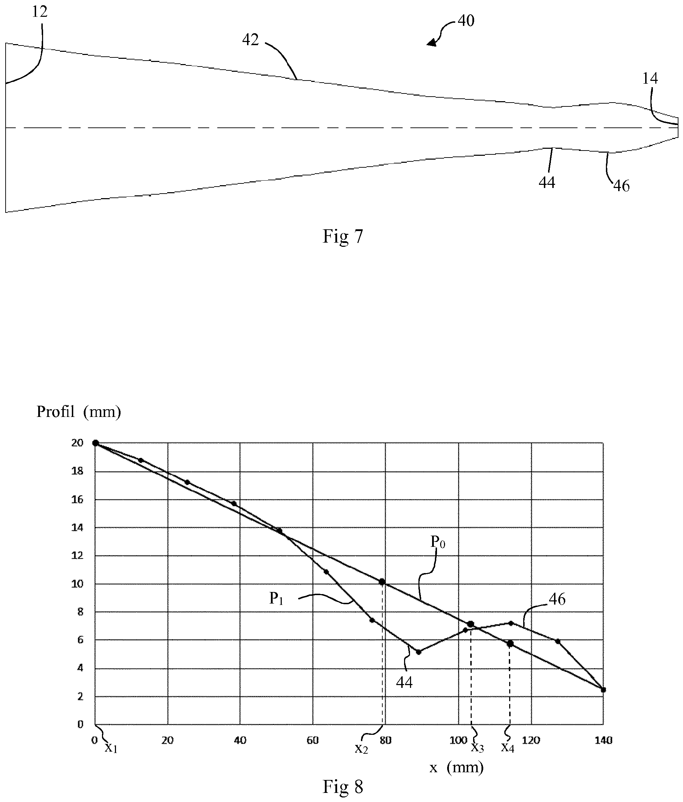

La figure 7 est une vue en coupe, partielle et schématique, d'un coupleur optique 40 et la figure 8 représente une courbe d'évolution $P_1$ du profil du coupleur optique 40 et une courbe d'évolution $P_0$ du profil tronconique correspondant, le profil $P_1$ ayant été obtenu par la mise en oeuvre du procédé décrit précédemment. Les simulations ont été réalisées avec un coupleur en PMMA ayant un rayon $R_{in}$ de 20 mm, un rayon de sortie $R_{out}$ de 2,5 mm et une longueur L de 140 mm. Pour ces simulations, le cas le plus défavorable correspond à un rayon incident arrivant à une hauteur h égale à $R_{in}$-0,05 mm avec un angle d'incidence initial $\theta_{0i}$ égal à 10°. Les positions $x_1$, $x_2$, $x_3$ correspondent aux abscisses des points de réflexion du rayon lumineux incident sur le profil tronconique $P_0$ et la position $x_4$ correspond à l'abscisse du point du profil tronconique $P_0$ au niveau duquel le rayon lumineux s'échappe du profil tronconique $P_0$.

Le coupleur 40 comprend l'ensemble des éléments du coupleur 10 à la différence que la paroi latérale tronconique 18 reliant la face d'entrée 12 à la face de sortie 14 du coupleur 10 est remplacée par une paroi latérale 42 de profil $P_1$ reliant la face d'entrée 12 à la face de sortie 14 de même longueur L et comprenant, successivement selon l'axe (Ox), une portion concave 44 plus mince que la paroi tronconique 18 et une portion convexe 46 plus épaisse que la paroi tronconique 18, les portions 44 et 46 formant une ondulation.

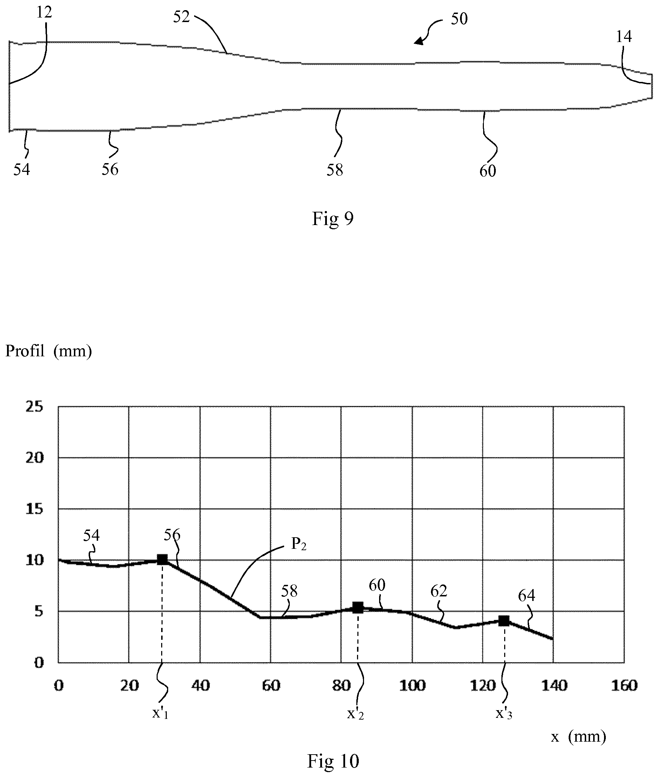

La figure 9 est une vue en coupe, partielle et schématique, d'un autre mode de réalisation d'un coupleur optique 50 et la figure 10 représente une courbe d'évolution $P_2$ du profil du coupleur 50, le profil $P_2$ ayant été obtenu par la mise en oeuvre du procédé décrit précédemment. Les simulations ont été réalisées avec un coupleur en PMMA ayant un rayon $R_{in}$ de 10 mm et un rayon de sortie $R_{out}$ de 2,5 mm, et une longueur L de 140 mm. Pour ces simulations, le cas le plus défavorable correspond à un rayon incident arrivant à une hauteur h égale à $R_{in}$-3,3 mm avec un angle d'incidence initial $\theta_{0i}$ égal à 45°. La position $x'_1$ correspond à l'abscisse du point du profil tronconique reposant sur les mêmes faces d'entrée et de sortie au niveau duquel le rayon lumineux s'échappe du profil tronconique. La position $x'_2$ correspond à l'abscisse du point du profil modifié, obtenu après une première mise en oeuvre des étapes 32, 34 et 36 décrites précédemment, au niveau duquel le rayon lumineux s'échappe du profil modifié. La position $x'_3$ correspond à l'abscisse du point du profil à nouveau modifié, obtenu après une deuxième mise en oeuvre des étapes 32, 34 et 36 décrites précédemment, au niveau duquel le rayon lumineux s'échappe du profil à nouveau modifié.

Le coupleur 50 comprend l'ensemble des éléments du coupleur 10 à la différence que la paroi latérale tronconique 18 reliant la face d'entrée 12 à la face de sortie 14 du coupleur 10 est remplacée par une paroi latérale 52 reliant la face d'entrée 12 à la face de sortie 14 de même longueur L et comprenant, successivement selon l'axe (Ox), une portion concave 54, une portion convexe 56, une portion concave 58, une portion convexe 60, une portion concave 62 et une portion convexe 64.

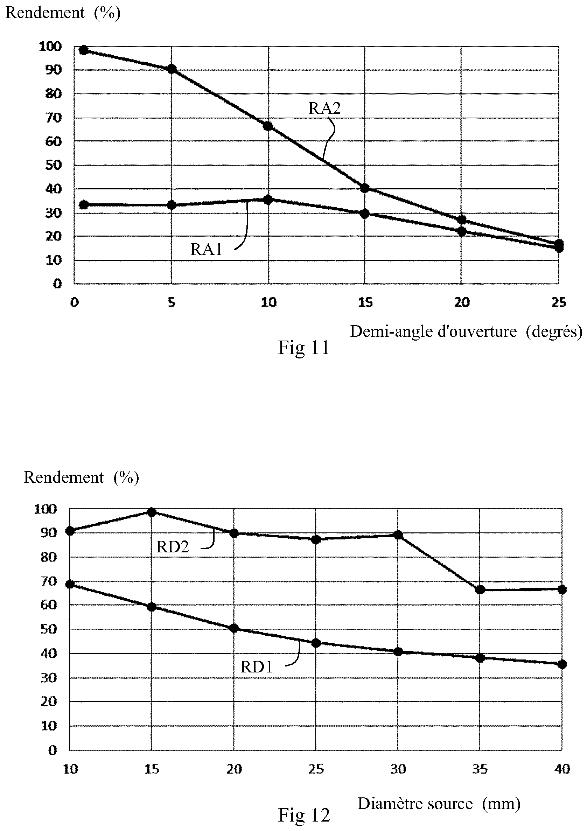

La figure 11 représente des courbes d'évolution RA1 et RA2 du rendement de transmission du coupleur optique en fonction du demi-angle d'ouverture de la source lumineuse respectivement pour le coupleur optique tronconique 10 (courbe RA1) et pour le coupleur optique 40 représenté en figure 7 (courbe RA2) comprenant une seule ondulation. Le demi-angle d'ouverture de la source lumineuse qui éclaire la face d'entrée 12 du coupleur optique est égal à l'angle d'incidence initial $\theta_{0i}$ décrit précédemment. Comme cela apparaît sur cette figure, un gain en transmission est obtenu pour le coupleur optique 40 par rapport au coupleur optique tronconique 10 jusqu'à des demi-angles d'ouverture supérieurs à 25°.

La figure 12 représente des courbes d'évolution RD1, RD2 du rendement de transmission du coupleur optique en fonction du diamètre de la source lumineuse respectivement pour un coupleur optique tronconique 10 (courbe RD1) et pour le coupleur optique 40 représenté en figure 7 (courbe RD2) comprenant une seule ondulation. Comme cela apparaît sur cette figure, un gain en transmission est obtenu pour le coupleur optique 40 par rapport au coupleur optique tronconique 10 quel que soit le diamètre de la source lumineuse.

Le coupleur optique présente de façon avantageuse une forme simple et peut être facilement fabriqué, par exemple par moulage ou par usinage. Le coupleur optique peut être réalisé en tout type de matériau au moins partiellement transparent au rayonnement utile, par exemple en PMMA, en polycarbonate ou en silicone.

De plus, les modes de réalisation du procédé de fabrication d'un coupleur optique décrits précédemment mettant en oeuvre les principes de l'optique géométrique, les performances du coupleur optique ne varient pas lorsque les dimensions du coupleur optique sont modifiées par homothétie. Ceci signifie que les performances déterminées pour un profil de coupleur optique de dimensions données sont les mêmes que celles déterminées pour un coupleur optique ayant le même profil grossi ou réduit à une autre échelle.

Il a été décrit le cas dans lequel la face de sortie 14 du coupleur optique est au contact d'un guide d'onde 16 du même matériau que le coupleur. Toutefois, il est clair que le guide d'onde 16 peut être en un matériau différent de celui du coupleur, par exemple un matériau ayant un indice de réfraction n3. Dans ce cas, il y a trois angles limites $\theta_{lim1}$, $\theta_{lim2}$, et $\theta_{lim3}$ à prendre en compte donnés par les relations 13) suivantes, n1 étant supérieur strictement à n3 et n3 étant strictement supérieur à n2 :

[Math 13]

$$\theta_{lim1} = \arcsin\left(\frac{n2}{n1}\right), \quad \theta_{lim2} = \arcsin\left(\frac{n3}{n1}\right), \quad \theta_{lim3} = \arcsin\left(\frac{n2}{n3}\right)$$

L'angle limite $\theta_{lim1}$ correspond à l'angle limite $\theta_{lim}$ décrit précédemment à l'interface entre le coupleur optique et le milieu extérieur, par exemple de l'air. L'angle limite $\theta_{lim2}$ correspond à l'angle limite à l'interface entre le coupleur optique et le guide d'onde 16. L'angle limite $\theta_{lim3}$ correspond à l'angle limite à l'interface entre le guide d'onde 16 et le milieu extérieur, par exemple de l'air.

Un exemple d'application du coupleur optique décrit précédemment concerne une opération chirurgicale, notamment une opération chirurgicale mettant en oeuvre des marqueurs à fluorescence infrarouge. Pour une telle opération chirurgicale, une source de lumière visible et une source de lumière infrarouge peuvent être utilisées et une caméra pour l'acquisition d'images dans la lumière visible et une caméra pour l'acquisition d'images infrarouges peuvent être utilisées. Le coupleur optique décrit précédemment peut être utilisé lors du guidage de la lumière visible et/ou infrarouge émises par les sources vers une scène à éclairer et/ou lors du guidage de la lumière visible et/ou infrarouge de la scène éclairée vers les caméras.

Divers modes de réalisation et variantes ont été décrits. Des modes de réalisation ont été décrits précédemment dans lesquels la face de sortie 14 est plane au contact de l'air. Il est clair que la face de sortie 14 peut avoir une forme différente, notamment pour augmenter l'extraction de lumière. Selon un mode de réalisation, la face de sortie 14 peut être incurvée, par exemple convexe ou concave. Selon un autre mode de réalisation, une texturation peut être prévue sur la face de sortie 14 pour augmenter la diffusion de lumière, la texturation pouvant comprendre la formation de reliefs sur la face de sortie 14 de dimensions maximales comprises entre 0,5 $\mu$m et 50 $\mu$m. De plus, dans les modes de réalisation décrits précédemment, le coupleur optique est à symétrie de révolution. Toutefois, il est clair que le coupleur optique peut avoir une forme différente. Enfin, la mise en oeuvre pratique des modes de réalisation et variantes décrits est à la portée de l'homme du métier à partir des indications fonctionnelles données ci-dessus.

## Revendications

1. Procédé de fabrication d'un coupleur optique (40 ; 50) comprenant une première face (12) destinée à recevoir un faisceau lumineux et une deuxième face (14) destinée à fournir au moins une partie du faisceau lumineux, les aires des sections droites des première et deuxième faces (12,14) étant différentes, et une paroi latérale (42 ; 52) reliant la première face à la deuxième face, la paroi latérale comprenant successivement, entre les première et deuxième faces, une première portion concave (44) et une première portion convexe (46), le procédé étant **caractérisé en ce qu'**il comprend les étapes suivantes :

   a) déterminer, pour un premier profil ($P_0$) de la paroi latérale, la position selon l'axe du premier profil du point auquel un rayon lumineux s'échappe du coupleur au travers de la paroi latérale ; et
   b) déterminer un deuxième profil (P1) en modifiant le premier profil en éloignant la paroi latérale de l'axe à ladite position par rapport au premier profil.

**2.** Procédé selon la revendication 1, dans lequel le premier profil ($P_0$) est un profil tronconique.

**3.** Procédé selon les revendications 1 ou 2, dans lequel les étapes a) et b) sont répétées au moins deux fois, le deuxième profil obtenu à la première itération de l'étape b) étant utilisé comme premier profil à la deuxième itération de l'étape a).

**4.** Procédé selon l'une quelconque des revendications 1 à 3, dans lequel le coupleur optique comprend en outre, entre les première et deuxième faces (12, 14), une deuxième portion concave (58), la première portion convexe (56) étant interposée entre la première portion concave (54) et la deuxième portion concave (58).

**5.** Procédé selon la revendication 4, dans lequel le coupleur optique comprend en outre, entre les première et deuxième faces (12, 14), une deuxième portion convexe (60), la deuxième portion concave (58) étant interposée entre la première portion convexe (56) et la deuxième portion convexe (60).

**6.** Procédé selon la revendication 5, dans lequel le coupleur optique comprend en outre, entre les première et deuxième faces (12, 14), une troisième portion concave (62), la deuxième portion convexe (60) étant interposée entre les deuxième et troisième portions concaves (58, 62).

**7.** Procédé selon l'une quelconque des revendications 1 à 6, dans lequel le coupleur est à symétrie de révolution.

**8.** Procédé selon l'une quelconque des revendications 1 à 7, dans lequel le rapport entre l'aire de la première face (12) et l'aire de la deuxième face (14) est compris entre 10 et 300.

**9.** Procédé selon l'une quelconque des revendications 1 à 8, dans lequel les première et deuxième faces (12, 14) sont parallèles.

**10.** Procédé selon l'une quelconque des revendications 1 à 9, dans lequel les première et deuxième faces (12, 14) sont planes.

**11.** Procédé selon l'une quelconque des revendications 1 à 10, dans lequel les première et deuxième faces (12, 14) ont chacune un rayon compris entre 1 mm et 100 mm.

**Patentansprüche**

**1.** Verfahren zur Herstellung eines optischen Kopplers (40; 50), der eine erste Oberfläche (12) aufweist, die dazu bestimmt ist, ein Lichtbündel zu empfangen, und eine zweite Oberfläche (14) aufweist, die dazu bestimmt ist, mindestens einen Teil des Lichtbündels abzugeben, wobei die Querschnittsflächen der ersten und der zweiten Oberfläche (12, 14) unterschiedlich sind, und eine Seitenwand (42; 52) aufweist, die die erste Oberfläche mit der zweiten Oberfläche verbindet, wobei die Seitenwand zwischen der ersten und der zweiten Oberfläche nacheinander einen ersten konkaven Abschnitt (44) und einen ersten konvexen Abschnitt (46) umfasst, **dadurch gekennzeichnet, dass** das Verfahren die folgenden Schritte aufweist:

a) Bestimmen, für ein erstes Profil ($P_0$) der Seitenwand, der Position des Punktes, an dem ein Lichtstrahl aus dem Koppler durch die Seitenwand austritt, entlang der Achse des ersten Profils; und
b) Bestimmen eines zweiten Profils ($P_1$) durch Verändern des ersten Profils durch Entfernen der Seitenwand von der Achse an dieser Position in Bezug auf das erste Profil.

**2.** Verfahren nach Anspruch 1, wobei das erste Profil ($P_0$) ein sich verjüngendes Profil ist.

**3.** Verfahren nach Anspruch 1 oder 2, bei dem die Schritte a) und b) mindestens zweimal wiederholt werden, wobei das bei der ersten Iteration von Schritt b) erhaltene zweite Profil als erstes Profil bei der zweiten Iteration von Schritt a) verwendet wird.

**4.** Verfahren nach einem der Ansprüche 1 bis 3, wobei der optische Koppler ferner zwischen der ersten und der zweiten Oberfläche (12, 14) einen zweiten konkaven Abschnitt (58) aufweist, wobei der erste konvexe Abschnitt (56) zwischen dem ersten konkaven Abschnitt (54) und dem zweiten konkaven Abschnitt (58) angeordnet ist.

**5.** Verfahren nach Anspruch 4, wobei der optische Koppler ferner zwischen der ersten und der zweiten Oberfläche (12, 14) einen zweiten konvexen Abschnitt (60) aufweist, wobei der zweite konkave Abschnitt (58) zwischen dem ersten konvexen Abschnitt (56) und dem zweiten konvexen Abschnitt (60) angeordnet ist.

**6.** Verfahren nach Anspruch 5, wobei der optische Koppler ferner zwischen der ersten und der zweiten Oberfläche (12, 14) einen dritten konkaven Abschnitt (62) aufweist, wobei der zweite konvexe Abschnitt (60) zwischen dem zweiten und dem dritten konkaven Abschnitt (58, 62) angeordnet ist.

**7.** Verfahren nach einem der Ansprüche 1 bis 6, wobei der Koppler eine Rotationssymmetrie aufweist.

**8.** Verfahren nach einem der Ansprüche 1 bis 7, wobei das Verhältnis der Fläche der ersten Oberfläche (12) zu der Fläche der zweiten Oberfläche (14) im Bereich von 10 bis 300 liegt.

**9.** Verfahren nach einem der Ansprüche 1 bis 8, wobei die erste und die zweite Oberfläche (12, 14) parallel sind.

**10.** Verfahren nach einem der Ansprüche 1 bis 9, wobei die erste und die zweite Oberfläche (12, 14) planar sind.

**11.** Verfahren nach einem der Ansprüche 1 bis 10, wobei die erste und die zweite Oberfläche (12, 14) jeweils einen Radius im Bereich von 1 mm bis 100 mm aufweisen.

**Claims**

**1.** A method of manufacturing an optical coupler (40; 50) comprising a first surface (12) intended to receive a light beam and a second surface (14) intended to supply at least part of the light beam, the areas of the cross-sections of the first and second surfaces (12, 14) being different, and a lateral wall (42; 52) connecting the first surface to the second surface, the lateral wall successively comprising, between the first and second surfaces, a first concave portion (44) and a first convex portion (46), the method being **characterized in that** it comprises the steps of:

a) determining, for a first profile ($P_0$) of the lateral wall, the position along the axis of the first profile of the point at which a light beam escapes from the coupler through the lateral wall; and
b) determining a second profile ($P_1$) by modifying the first profile by drawing away the lateral wall from the axis at said position with respect to the first profile.

**2.** The method of claim 1, wherein the first profile ($P_0$) is a tapered profile.

**3.** The method of claims 1 or 2, wherein steps a) and b) are repeated at least twice, the second profile obtained at the first iteration of step b) being used as the first profile at the second iteration of step a).

**4.** The method of any of claims 1 to 3, wherein the optical coupler further comprises, between the first and second surfaces (12, 14), a second concave portion (58), the first convex portion (56) being interposed between the first concave portion (54) and the second concave portion (58).

**5.** The method of claim 4, wherein the optical coupler further comprises, between the first and second surfaces (12, 14), a second convex portion (60), the second concave portion (58) being interposed between the first convex portion (56) and the second convex portion (60).

**6.** The method of claim 5, wherein the optical coupler further comprises, between the first and second surfaces (12, 14), a third concave portion (62), the second convex portion (60) being interposed between the second and third concave portions (58, 62).

**7.** The method of any of claims 1 to 6, wherein the coupler has a symmetry of revolution.

**8.** The method of any of claims 1 to 7, wherein the ratio of the area of the first surface (12) to the area of the second surface (14) is in the range from 10 to 300.

**9.** The method of any of claims 1 to 8, wherein the first and second surfaces (12, 14) are parallel.

**10.** The method of any of claims 1 to 9, wherein the first and second surfaces (12, 14) are planar.

**11.** The method of any of claims 1 to 10, wherein the first and second surfaces (12, 14) each have a radius in the range from 1 mm to 100 mm.

Fig 1

Fig 2

Fig 3

Fig 4

Fig 5

Fig 6

12

42

40

14

44

46

Fig 7

Profil (mm)

P₀

P₁

46

44

x (mm)

Fig 8

12 52 50 14

54 56 58 60

Fig 9

Profil (mm)

Fig 10

Rendement (%)

Demi-angle d'ouverture (degrés)

Fig 11

Rendement (%)

Fig 12    Diamètre source (mm)

## RÉFÉRENCES CITÉES DANS LA DESCRIPTION

**Documents brevets cités dans la description**

- FR 2362408
- US 5192863 A
- US 5301249 A
- EP 1739468 A